# EUROPEAN PATENT SPECIFICATION

(11) **EP 2 959 394 B1**
(45) Date of publication and mention of the grant of the patent: **12.05.2021**
(21) Application number: 14753949.8
(22) Date of filing: 21.02.2014
(51) Int. Cl.: G06F 13/14, G06F 3/01, G06F 1/16, G08C 17/02

(54) **METHODS AND DEVICES THAT COMBINE MUSCLE ACTIVITY SENSOR SIGNALS AND INERTIAL SENSOR SIGNALS FOR GESTURE-BASED CONTROL**
VERFAHREN UND VORRICHTUNGEN ZUR KOMBINATION VON MUSKELAKTIVITÄTSSENSORSIGNALEN UND TRÄGHEITSSENSORSIGNALEN FÜR GESTENBASIERTE STEUERUNG
PROCÉDÉS ET DISPOSITIFS COMBINANT DES SIGNAUX DE CAPTEUR D'ACTIVITÉ MUSCULAIRE ET DES SIGNAUX DE CAPTEUR INERTIEL POUR UNE COMMANDE GESTUELLE

(30) Priority: 22.02.2013 US 201361768322 P
(43) Date of publication of application: 30.12.2015
(73) Proprietor: Facebook Technologies, LLC., Menlo Park, CA 94025 (US)
(72) Inventor: LAKE, Stephen, Kitchener, Ontario N2G 1H2 (CA); BAILEY, Matthew, Kitchener, Ontario N2G 1H2 (CA); GRANT, Aaron, Kitchener, Ontario N2G 1H2 (CA)
(74) Representative: Murgitroyd & Company
(86) International application number: PCT/US2014/017799
(87) International publication number: WO 2014/130871

(56) References cited:
- WO-A2-2011/070554
- US-A1- 2004 024 312
- US-A1- 2006 121 958
- US-A1- 2007 276 270
- US-A1- 2009 327 171
- US-A1- 2010 280 628
- US-A1- 2012 071 092
- US-A1- 2013 027 341
- MOKAYA FRANK ET AL: "Poster abstract: MARS: A muscle activity recognition system using inertial sensors", 2012 ACM/IEEE 11TH INTERNATIONAL CONFERENCE ON INFORMATION PROCESSING IN SENSOR NETWORKS (IPSN), IEEE, 16 April 2012 (2012-04-16), pages 97-98, XP032657376, DOI: 10.1109/IPSN.2012.6920973 [retrieved on 2014-10-10]

## Description

### BACKGROUND

### Technical Field

The present methods and devices relate generally to human electronics interfaces, and more specifically to wearable electronic devices that combine muscle activity sensor signals and inertial sensor signals to provide gesture-based control of electronic devices.

### Description of the Related Art

### WEARABLE ELECTRON IC DEVICES

Electronic devices are commonplace throughout most of the world today. Advancements in integrated circuit technology have enabled the development of electronic devices that are sufficiently small and lightweight to be carried by the user. Such "portable" electronic devices may include on board power supplies (such as batteries or other power storage systems) and may be designed to operate without any wire-connections to other electronic systems; however, a small and lightweight electronic device may still be considered portable even if it includes a wire-connection to another electronic system. For example, a microphone may be considered a portable electronic device whether it is operated wirelessly or through a wire-connection.

The convenience afforded by the portability of electronic devices has fostered a huge industry. Smartphones, audio players, laptop computers, tablet computers, and ebook readers are all examples of portable electronic devices. However, the convenience of being able to carry a portable electronic device has also introduced the inconvenience of having one's hand(s) encumbered by the device itself. This problem is addressed by making an electronic device not only portable, but wearable.

A wearable electronic device is any portable electronic device that a user can carry without physically grasping, clutching, or otherwise holding onto the device with their hands. For example, a wearable electronic device may be attached or coupled to the user by a strap or straps, a band or bands, a clip or clips, an adhesive, a pin and clasp, an article of clothing, tension or elastic support, an interference fit, an ergonomic form, etc. Examples of wearable electronic devices include digital wristwatches, electronic armbands, electronic rings, electronic ankle-bracelets or "anklets," head-mounted electronic display units, hearing aids, and so on.

### ELECTROMYOGRAPHY DEVICES

Electromyography ("EMG") is a process for detecting and processing the electrical signals generated by muscle activity. EMG devices employ EMG sensors that are responsive to the range of electrical potentials (typically µV - mV) involved in muscle activity. EMG signals may be used in a wide variety of applications, including: medical monitoring and diagnosis, muscle rehabilitation, exercise and training, prosthetic control, and even in controlling functions of electronic devices.

### HUMAN-ELECTRONICS INTERFACES

A wearable electronic device may provide direct functionality for a user (such as audio playback, data display, computing functions, etc.) or it may provide electronics to realize a human-electronics interface that enables a user to interact with, receive information from, or control another electronic device. Throughout this specification and the appended claims, a human-computer interface ("HCI") is used as an example of a human-electronics interface. The present methods and devices may be applied to HCls, but may also be applied to any other form of human-electronics interface.

In recent years, there has been an increasing need for human computer interfaces, or HCls, for use in various control applications. An example of a technology for HCls that has received some attention is the sensing of muscle activity through the surface of the skin, called sEMG (surface electromyography), to detect hand and/or arm gestures performed by a user.

For example, a device that contains EMG sensors may be worn on the wrist or forearm of a user and used to detect electrical signals generated by muscle activity. Pattern recognition algorithms are used to analyze the electrical data to identify the physical gesture that the user has performed. There is a comprehensive overview of this technology and its limitations in US Patent No. 8,170,656.

In order for gesture sensing devices to be commercially viable, the devices must have a very high gesture detection rate with a relatively low build cost. One limitation is that sEMG-based sensors are very susceptible to variations in operating conditions, and signals generated by sEMG sensors may be affected by such variables as skin perspiration, amount of hair, and fat content in the skin. Because of this, it is very difficult to achieve high gesture recognition rates using just sEMG sensors alone.

Therefore, what is needed is an effective HCI device which overcomes these limitations in the prior art.

### BRIEF SUMMARY

The present invention provides a solution for the mentioned problems according to the independent claims. Preferred embodiments are provided by the dependent claims.

### BRIEF DESCRIPTION OF THE SEVERAL VIEWS OF THE DRAWINGS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn are not intended to convey any information regarding the actual shape of the particular elements, and have been solely selected for ease of recognition in the drawings.
FIG. 1 illustrates a user wearing a connected device and a wearable muscle control device in accordance with the present methods and devices.
FIG. 2A illustrates a detailed view of a wearable muscle control device in accordance with the present methods and devices.
FIG. 2B illustrates a data graph corresponding to an electrical signal detected by an EMG sensor.
FIG. 3 illustrates wireless communication between a connected device and a wearable muscle control device in accordance with the present methods and devices.
FIG. 4 illustrates a user's hand and wrist gesture processed as a control signal by the wearable muscle control device for interacting with content displayed on the connected device.
FIG. 5 illustrates a schematic system architecture of a wearable muscle control device in accordance with the present methods and devices.
FIG. 6 illustrates a gesture training module utilizing samples having a sliding window with an overlap in accordance with the present methods and devices.
FIG. 7 illustrates a pattern recognition system with a hierarchical decision tree with each node representing a different classifier in accordance with the present methods and devices.
FIG. 8 illustrates monitoring a signal channel for an RMS value that exceeds a certain threshold to initiate gesture recognition.
FIG. 9 illustrates a schematic flow chart of a method of operating a wearable muscle control device in accordance with the present methods and devices.
FIG. 10 is a flow-diagram showing another method of operating a wearable electronic device in accordance with the present methods and devices.

In the drawings, embodiments of the present methods and devices are illustrated by way of example. It is to be expressly understood that the description and drawings are only for the purpose of illustration and as an aid to understanding, and are not intended as a definition of the limits of the present methods and devices.

### DETAILED DESCRIPTION

In the following description, certain specific details are set forth in order to provide a thorough understanding of various disclosed examples. However, one skilled in the relevant art will recognize that examples may be practiced without one or more of these specific details, or with other methods, components, materials, etc. In other instances, well-known structures associated with electronic devices, and in particular portable electronic devices such as wearable electronic devices, have not been shown or described in detail to avoid unnecessarily obscuring descriptions of the examples. The present methods and devices relate generally to human computer interface devices, and more specifically to a wearable muscle control device that combines signals from on-board muscle activity sensors and on board inertial sensors in order to provide a gesture-based human-computer interface (HCI).

Throughout this specification and the appended claims, the term "gesture" is used to generally refer to a physical action (e.g., a movement, a stretch, a flex, a pose) performed or otherwise effected by a user. Any physical action performed or otherwise effected by a user that involves detectable muscle activity (detectable, e.g., by at least one appropriately positioned EMG sensor) and/or detectable motion (detectable, e.g., by at least one appropriately positioned inertial sensor, such as an accelerometer and/or a gyroscope) may constitute a gesture in the present methods and devices.

The wearable muscle control device includes a band that is worn on the arm (e.g., the forearm) of the user. The band carries a plurality of cEMG sensors.

An EMG signal is an oscillating waveform that varies in both frequency and amplitude, and a majority of signal information may be contained within, for example, the 5Hz to 250Hz frequency band. Advantageously, the cEMG sensors used in the wearable muscle control devices described herein are active, in that they have an amplification circuit providing an amplification stage located on the sensor board itself. The signal from the cEMG sensor may thus be amplified before it is sent to the main logic board (i.e., to the processor) of the wearable muscle control device to minimize transmission line interference.

The cEMG sensors (i.e., capacitive EMG sensors) may sense muscle activity by capacitively coupling to the muscle activity which induces a charge in the cEMG electrode, thereby obviating the need for a direct electrical connection with the skin. Therefore, by avoiding a direct electrical connection, the signal is less susceptible to variations resulting from a direct connection.

In addition to cEMG sensors, the wearable muscle control devices described herein also include one or more inertial sensor(s) (which may include, for example, an accelerometer) to measure motions (e.g., accelerations) of the user's arm. The inertial sensor(s) may include one or a set of accelerometers which sense accelerations in three degrees of freedom (x, y, z directions), and may sense the location of the wearable electronic device on the body of a user (e.g. the forearm). The signal(s) provided by the inertial sensor(s) may be combined with the signal(s) provided by the cEMG sensors in order to improve the quality and/or quantity of gestures identifiable by the wearable muscle control device.

The wearable muscle control devices described herein may further include a filtering circuit to filter and process the signals provided by the muscle activity sensors and/or by the inertial sensors, and/or an analog-to-digital conversion circuit to convert analog signals provided by the muscle activity sensors and/or inertial sensors into digital signals. The wearable muscle control devices described herein include a processor to process the signals provided by the muscle activity sensors and inertial sensors and to identify the physical gestures performed by the user based on either or both of at least one signal provided by at least one muscle activity sensor and at least one signal provided by at least one inertial sensor.

The wearable muscle control devices described herein may be connected by wire to a connected device which receives control inputs therefrom (i.e., based on the physical gesture(s) performed by the user and identified by the wearable electronic device), and/or the wearable muscle control devices described herein may include one or more batteries and a wireless transceiver module (e.g., a wireless transmitter) for wireless connection to the connected device.

In addition to cEMG sensors, the muscle activity sensors employed in the wearable muscle control devices described herein may include mechanomyography (MMG) sensors.

As previously described, methods and devices that employ muscle activity sensors to achieve gesture-based control in an HCI have been described in the art (e.g., in the aforementioned US Patent 8,170,656).

However, muscle activity sensors have significant limitations and drawbacks if used alone for the purpose of gesture detection and identification. In accordance with the present methods and devices, gesture-based control in an HCI may be enhanced by implementing wearable electronic devices that combine signals from at least one on-board muscle activity sensor with signals from at least one on-board inertial sensor in order to capture more complete and/or more distinguishable information about the physical gesture(s) being performed by the user. Some of the limitations and drawbacks of muscle activity sensors are now described.

For example, surface electromyographic (sEMG) sensors may be used to measure forearm muscle activity. A sEMG sensor typically requires direct contact with the skin of the user in order to measure the electrical activity conducted from the underlying muscles through the fat and skin, or in order to be sufficiently proximate the underlying muscles in order to capacitively couple thereto. There are some inherent limitations with sEMG, as the quality of the acquired signal is directly related to the skin conditions such as impedance, perspiration, amount of arm hair, fat content, and a number of other attributes. The effects of variations in skin conditions can be mitigated by the use of moisturizing and conductive gels, shaving the skin, or other skin preparation practices to get a reliable and repeatable signal from this type of sensor, but such is undesirable in wearable electronic devices for use by typical consumers.

The various examples described herein provide that, in order to accommodate the limitations of muscle activity sensors without invoking impractical solutions such as shaving and conductive gels, one or more inertial sensors (e.g., one or more accelerometer sensors) are included in the wearable muscle control device and used to provide signals representative of, for example, larger gestures made by a user, for example involving the elbow or even the shoulders of a user. When used together with muscle activity sensors for detecting more subtle gestures (e.g. made by the hand and/or wrist for example), information from the inertial sensor(s) can significantly improve the accuracy of gesture identification algorithms and/or expand the number of gestures that a wearable muscle control device is able to identify. For example, inertial sensors can provide relative velocity and orientation data in combination with the muscle activity data from muscle activity sensors to increase the quantity and variety of data associated with any particular gesture.

Systems and methods that combine signals provided by muscle activity sensors and signals provided by inertial sensors in order to achieve improved gesture identification have been proposed in the art, as in for example, Xiong et al., "A Novel HCI Based on EMG and IMU," Proceedings of the 2011 IEEE International Conference on Robotics and Biomimetics, December 2011. However, all such proposals involve combining signals from physically disparate sensor systems (e.g., one or more EMG sensors in a first apparatus worn at a first location on the user's body and one or more accelerometers in a second apparatus worn at a second location on the user's body, where the first apparatus and the second apparatus are physically and communicatively decoupled from one another) that separately provide signals to a common off-board computing system (i.e., a computing system that is not wearable or worn by the user) for processing. As a consequence of at least the many separate wire connections to off-board systems and the off-board processing provided by a physically disparate computing system, such proposals suffer from the drawbacks of being bulky and impractical for use by general consumers for general human-electronics interfaces, as well as being severely limited in the variety of electronic/computing devices that they are operable to control. The present methods and devices overcome these drawbacks by incorporating muscle activity sensors, inertial sensors, and a processor all into a single wearable muscle control device that detects, processes, and identifies gestures all on-board the device itself.

An illustrative example of a wearable muscle control device that incorporates the teachings of the present methods and devices will now be described with reference to the drawings.

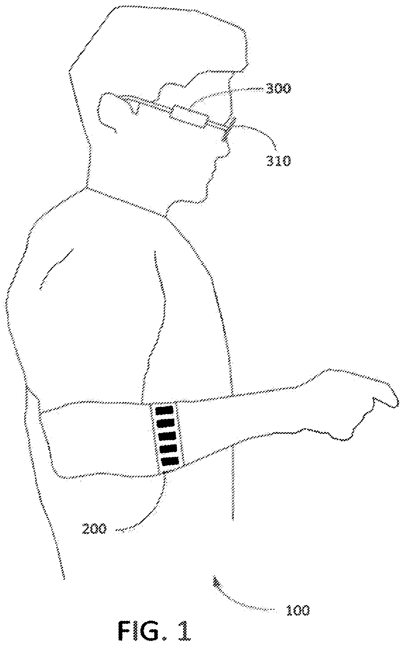

Shown in FIG. 1 is an illustrative user 100 wearing a connected device 310 with connected device control 300, and a wearable electronic device 200 in accordance with the present methods and devices. In this illustrative example, wearable muscle control device 200 includes a flexible, stretchable, and/or elastic (i.e., "expandable") band that may be worn on the forearm of user 100 as shown. The band carries (i.e., physically couples to) the other components of wearable muscle control device 200.

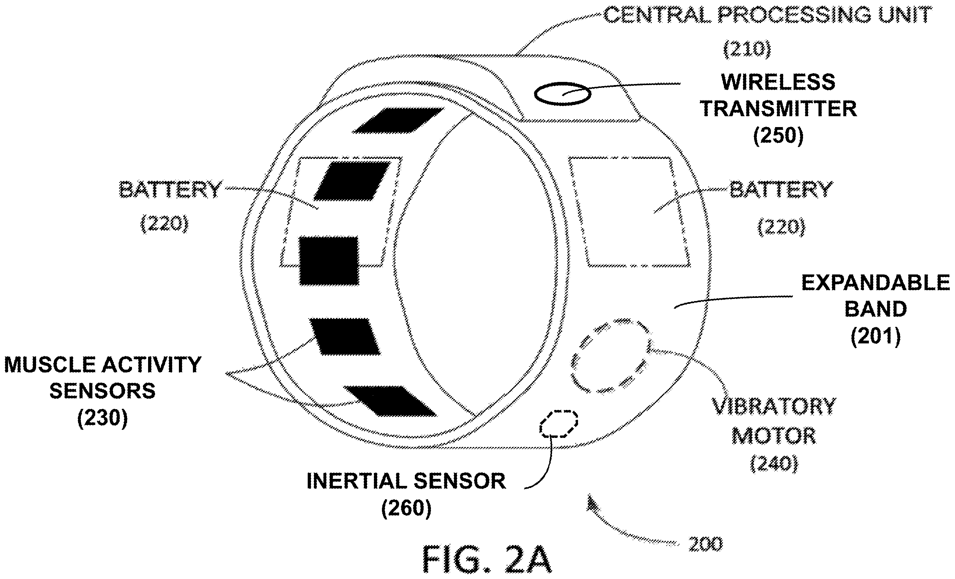

FIG. 2A illustrates a detailed view of the wearable muscle control device 200 of FIG. 1 in accordance with the present methods and devices. As shown, wearable muscle control device 200 includes an expandable band 201 that carries: a central processing unit (i.e., a "processor") 210, one or more batteries 220, which may be rechargeable, and which may be utilized concurrently or sequentially in conventional manner, muscle activity sensor(s) 230 which, when more than one sensor 230 is included, may be positioned radially around the circumference of band 201 such that the muscle activity sensor(s) 230 can detect muscle activity in response to physical gestures performed by user 100, at least one inertial sensor 260, and a wireless transmitter 250. Muscle activity sensor(s) 230, inertial sensor 260, and wireless transmitter 250 are all communicatively coupled to processor 210 on-board wearable muscle control device 200. Wearable muscle control device 200 may further include a haptic feedback mechanism, such as a vibratory motor or actuator 240 to provide haptic feedback as described further below.

Processor 210 may be any type of processor, including but not limited to: a digital microprocessor or microcontroller, an application-specific integrated circuit (ASIC), a field-programmable gate array (FPGA), a digital signal processor (DSP), a graphics processing unit (GPU), a programmable gate array (PGA), a programmable logic unit (PLU), or the like.

In some applications, for simplicity, the wearable muscle control device 200 may be marked to be worn in the appropriate position and orientation on the arm. For example, a marking on the wearable muscle control device 200 may show the top center of the forearm and the direction in which the wearable muscle control device 200 should be worn. In other applications, the wearable muscle control device 200 may perform a calibration routine when first worn, prior to operation for gesture identification, such that the positioning of the muscle activity sensors 230 is identified and does not need to depend on the location of particular muscles in the forearm.

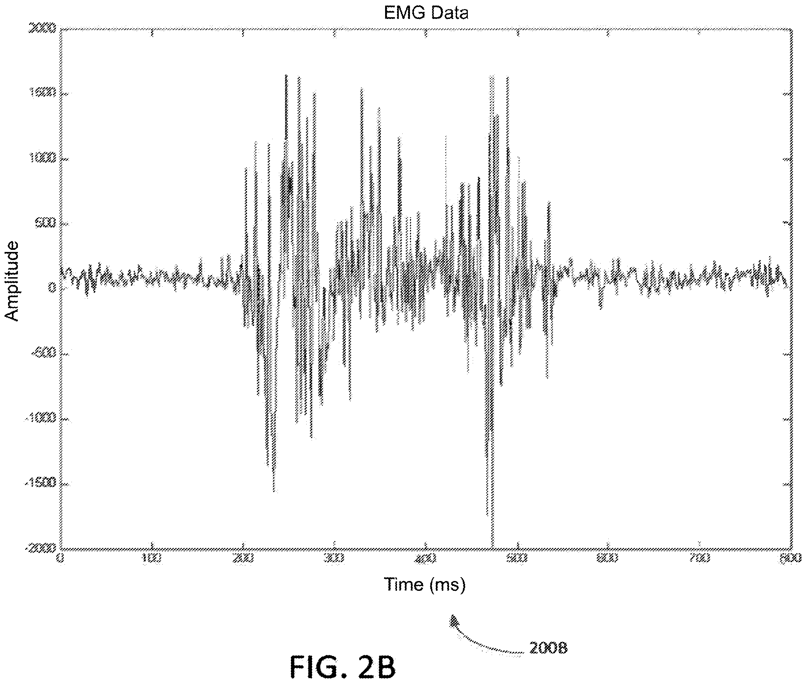

Muscle activity sensors 230 include capacitive EMG (cEMG) sensors adapted to detect electrical signals in the forearm of user 100 for generating a control signal. cEMG typically does not require direct contact with the skin as with other sEMG sensors described earlier. Rather, cEMG sensors are capacitively coupled to the electrical signals generated by contracting muscles, and may operate at a distance of up to 3mm from the skin. By way of example, the cEMG signal can be an oscillating waveform that varies in both frequency and amplitude, and the majority of signal information may be contained within, for example, the 5Hz to 250Hz frequency band. An illustrative example of a cEMG signal is shown in FIG. 2B.

Muscle activity sensors 230 may include one or more MMG sensors comprising piezoelectric sensors to measure the vibrations at the surface of the skin produced by the underlying muscles when contracted. By way of example, the MMG signal generated may be an oscillating waveform that varies in both frequency and amplitude, and a majority of signal information may be contained within, for example, the 5Hz to 250Hz frequency band. Because the MMG signal is acquired via mechanical means, electrical variations like skin impedance do not have an effect on the signal. The MMG signal is very similar to the illustrative example of the cEMG signal shown in FIG. 2B.

In some applications, cEMG or MMG may either or both provide a reliable control signal that can be obtained over the duration of a full day, as skin perspiration and moisturization changes do not typically affect the signal.

Inertial sensor 260 may include one or more accelerometer sensors and/or one or more gyroscope sensors for detecting additional aspects of gestures made by user 100 in three degrees of freedom. The inertial sensor signal may consist of three digital channels of data, each representing the acceleration in either the x, y, or z direction. The inertial sensor 260 may be subject to all of the accelerations that the user's arm is subject to, and may further incorporate motion of the body as a whole. As an example, inertial sensors 260 may include an inertial measurement unit (IMU) such as an MPU-9150 Nine-Axis MEMS MotionTracking™ Device from InvenSense that comprises multiple inertial sensors, including multiple accelerometer(s) and multiple gyroscopes.

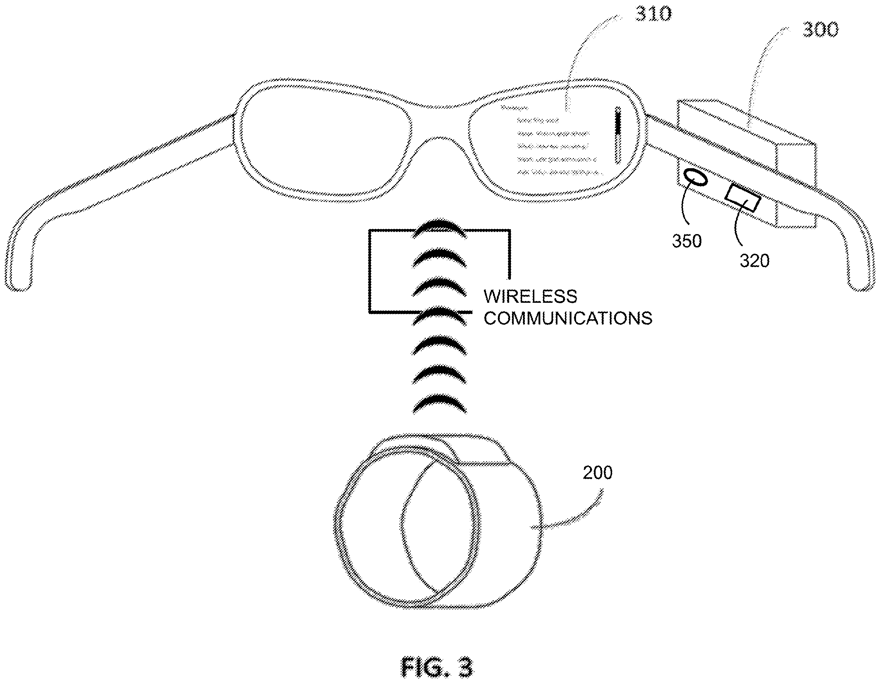

Now referring to FIG. 3, shown is an illustration of wireless communication (e.g. Bluetooth) between wearable electronic device 200 and a connected device 310 and connected device control 300. The illustrative connected device in this example is a wearable heads-up display. However, it will be appreciated that the connected device may be one of any number of devices that may receive a control input, including but not limited to a general purpose computer, a robot, an electronic consumer device, a mobile phone, etc.

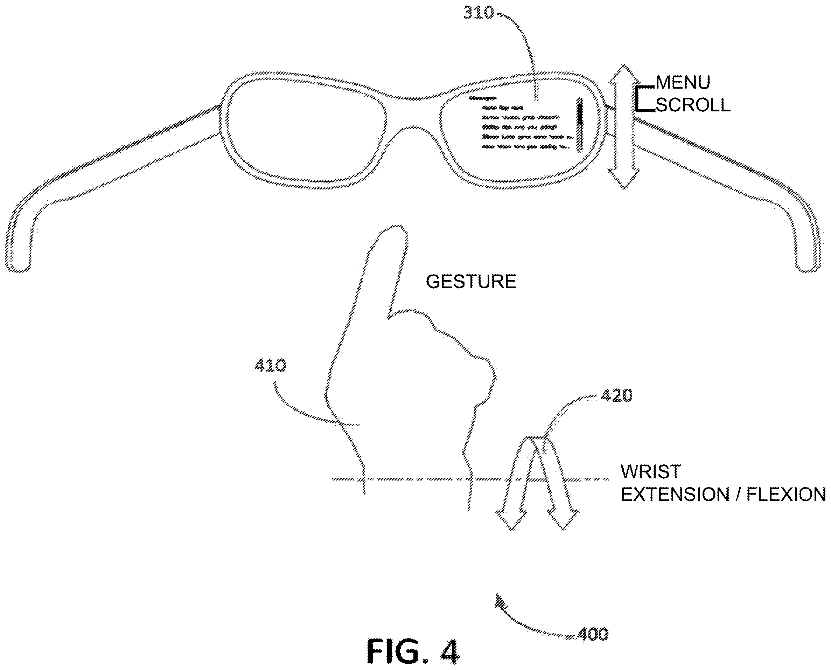

This wireless communication is utilized to transmit at least one signal from wearable muscle control device 200 to connected device control 300 in response to the processor 210 of wearable muscle control device 200 identifying a physical gesture performed by the user 100. This is illustrated by way of example in FIG. 4, in which user 100's hand and wrist gesture is detected by muscle activity sensors 230 and/or by inertial sensor 260, each or both of which provide at least one signal that is processed by processor 210 to identify the gesture performed by the user, and, in response to identifying the gesture, at least one signal is wirelessly transmitted by transmitter 250 for interacting with content displayed on the connected device 310.

In this particular example, a physical gesture 410 performed by the user 100 involves extending an index finger, which is detected by muscle activity sensors 230 of wearable muscle control device 200, and making a wrist flexion motion 420, which is detected by inertial sensor 260 of wearable muscle control device 200. In response to the detected muscle activity and the detected motion, muscle activity sensors 230 and inertial sensor 260, respectively, provide signals to on-board processor 210 of wearable muscle control device 200. Processor 210 processes both of the signals, identifies the physical gesture performed by the user 100 based on both of the signals, and provides at least one control signal to wireless transmitter 250, which transmits the control signal to connected device 310 for causing a menu appearing on display 310 to scroll downwards.

As another example, a similar gesture performed by user 100 may involve extending the index finger, which is detected by muscle activity sensors 230 of wearable muscle control device 200, and making a wrist extension motion, which is detected by inertial sensor 260 of wearable muscle control device 200. In response to the detected muscle activity and the detected motion, muscle activity sensors 230 and inertial sensor 260, respectively, provide signals to on- board processor 210 of wearable muscle control device 200. Processor 210 processes both of the signals, identifies the physical gesture performed by the user 100 based on both of the signals, and provides at least one control signal to wireless transmitter 250, which transmits the control signal to connected device 310 for causing a menu appearing on display 310 to scroll upwards.

As yet another example, another gesture performed by user 100 may involve extending the index finger, which is detected by muscle activity sensors 230 of wearable electronic device 200, and making a poking motion involving a slight movement of the elbow and shoulder, which is detected by inertial sensor 260 of wearable electronic device 200. In response to the detected muscle activity and the detected motion, muscle activity sensors 230 and inertial sensor 260, respectively, provide signals to processor 210 of wearable muscle control device 200. Processor 210 processes both of the signals, identifies the physical gesture performed by the user 100 based on both of the signals, and provides at least one control signal to wireless transmitter 250, which transmits the control signal to connected device 310 for causing a highlighted menu item appearing on display 310 to be selected.

In each of the three examples described above, at least one signal provided by at least one muscle activity sensor 230 and at least one signal provided by at least one inertial sensor 260 are both processed simultaneously by processor 210 in order to identify the physical gesture performed by user 100. In each case, at least one muscle activity sensor 230 detects the extension of user 100's index finger and at least one inertial sensor 260 detects a unique motion: wrist flexion, wrist extension, and poking. The extension of user 100's index finger and the motion (i.e., the wrist flexion, wrist extension, or poking action) may be processed as multiple components of a single physical gesture or as two separate gestures. As an alternative to simultaneously processing, by processor 210, both the at least one signal from muscle activity sensors 230 and the at least one signal from inertial sensor 260, the signals may be processed in sequence or in series. For example, the at least one signal from muscle activity sensors 230 may first be processed by processor 210 to identify that user 100 has performed a first gesture (i.e., extending the index finger) and then the at least one signal from inertial sensor 260 may be processed by processor 210 to identify that user 100 has performed a second gesture (i.e., a wrist flexion, a wrist extension, or a poking action). In this case, when processor 210 identifies (based on at least one signal from muscle activity sensors 230) that user 100 has performed an extension of their index finger, a first signal may be transmitted from transmitter 250 to, for example, indicate to connected device 310 that a menu navigation command is forthcoming. Then, when processor 210 identifies (based on at least one signal from inertial sensor 260) that user 100 has performed a second gesture characterized by a motion (i.e., a wrist flexion, a wrist extension, or a poking action), a corresponding second signal may be transmitted from transmitter 250 to effect a corresponding menu navigation action.

If the user extends a different finger other than the index finger, muscle activity sensors 230 will detect this and will cause a different gesture to be identified by processor 210, which may cause a different control signal to be generated. For example, extending the pinky finger instead of the index finger may cause wearable electronic device 200 to interpret the user's gestures with functions analogous to clicking a right mouse button rather than a left mouse button in a conventional mouse user interface. Extending both the index and pinky fingers at the same time may cause wearable muscle control device 200 to interpret the user's gestures with yet other functions analogous to clicking a third mouse button in a conventional mouse user interface.

In accordance with the present methods and devices, wearable muscle control device 200 incorporates both muscle activity sensors 230 and inertial sensors 260 to recognize a wider range of user gestures (and/or to provide enhanced accuracy in recognizing gestures) than is typically achievable using muscle activity sensors alone.

Advantageously, wearable muscle control device 200 is itself adapted to identify gestures from the detected signals as described. However, in an alternative implementation, the detected signals may be transmitted to the connected device 310 and connected device control 300 to be interpreted as gestures at the connected device control 300. Whether the detected signals are interpreted at the device 200 or at the connected device control 300, the detected signal is first interpreted as a recognized gesture in order to interact with content displayed on the display 310.

In some implementations, upon interpretation of a gesture, wearable muscle control device 200 may include a haptic feedback module to provide feedback to user 100 when a gesture has been recognized. This haptic feedback provides a user with confirmation that the user's gesture has been recognized and successfully converted to a control signal to interact with, for example, content displayed on display 310. The haptic feedback module may comprise, for example, a vibrating mechanism such as a vibratory motor 240 or actuator built into the wearable electronic device 200.

Alternatively, rather than haptic feedback provided by the wearable muscle control device 200, confirmation of recognition of a gesture may be provided by auditory feedback, either generated by a speaker on the wearable electronic device, or operatively connected to the connected device 310.

In still another example, confirmation of recognition of a gesture may also be provided visually on the display 310 itself. If there is more than one possible gesture that may be interpreted from the detected signals, rather than providing a possibly erroneous signal, the wearable muscle control device 200 and/or the connected device control 300 may provide a selection of two or more possible gestures as possible interpretation, and the user may be prompted to select (e.g., by performing a selection gesture) from one of them to confirm the intended gesture and corresponding control.

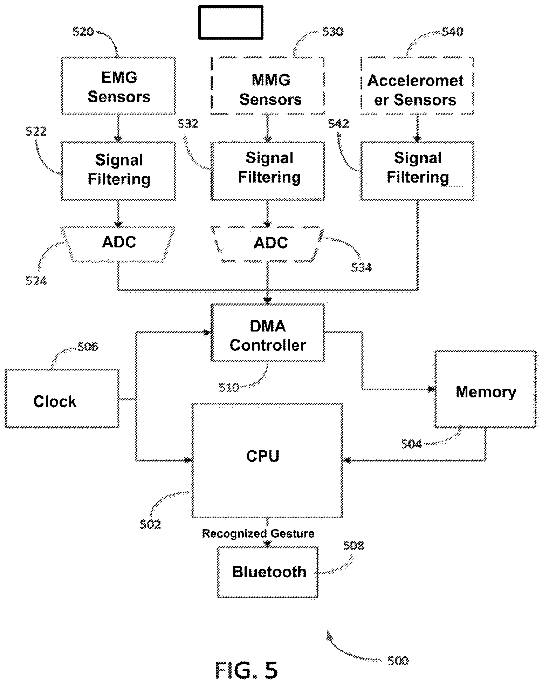

Now referring to FIG. 5, shown is an illustrative schematic system architecture 500 of a wearable electronic device (e.g., wearable muscle control device 200) in accordance with the present methods and devices. As shown, system architecture 500 includes a CPU or "processor" 502, a non-transitory computer-readable storage medium or memory 504, a system clock 506, a wireless communication module 508 (e.g. Bluetooth™, ZigBee™, etc.), and a direct memory access (DMA) controller 510. As shown, DMA controller 510 is adapted to receive inputs from various sensors including one or more EMG (i.e., muscle activity) sensors 520, MMG sensors 530 and accelerometer (i.e., inertial) sensors 540.

In the example of architecture 500, detected analog signals from one or more EMG sensors 520 are processed through signal filtering circuit 522. The signal(s) may be band-passed between, for example, 10Hz to 500Hz, and amplified by an amplification circuit by a total of, for example, about 1000 to 4000 times. However, this filtering and amplification can be altered by software and/or by hardware to whatever is required based on the analog signal generated by the EMG sensors 520. A notch filter at 60Hz, or at any other relevant frequency, may also be used to remove powerline noise.

The signal(s) may be converted from analog to digital signals by analog-to-digital conversion circuit (ADC) 524, for example at 12-bit resolution, and then clocked into onboard memory 504 by the DMA controller 510 to later be processed by the CPU/processor 502. Once data has accumulated, the CPU/processor 502 wakes up and processes this data stored in memory 504. The number of data points that accumulate before the CPU 502 wakes up is adjustable, and is referred to herein as the feature window size.

If one or more MMG sensors 530 are also used, then the detected signals from the MMG sensors 530 are processed through signal filter 532 and converted from analog to digital signals by ADC 534. Digital signals from one or more accelerometer sensors 540 may also be processed through signal filter 542 and received by DMA controller 510.

### Gesture Training

In some applications, wearable electronic device 200 may be provided with a set of pre-defined gestures already stored in the memory thereof, with device 200 being operable to identify when the user performs a gesture from the set of pre-defined gestures. Either instead of or in addition to pre-defined gestures, wearable electronic device 200 may be trained to recognize a variety of user-defined gestures. For example, the user may first input a name for a gesture that the user wants the device 200 to be able to recognize, and when the device 200 is ready to record the gesture, the device 200 will prompt the user to make the gesture. The muscle activity sensor(s) and/or the inertial sensor(s) are then used to acquire data channels sampled on the band (e.g. at 1000Hz) over a sufficient length of time to cover the duration of the gesture being performed.

The acquired data may then be segmented into windows with a predetermined length, where each window overlaps the previous window by a predetermined length (including a predetermined length of zero). Features of the muscle activity signal(s) and/or inertial sensor signal(s) are then calculated from each window on each channel of data. These features are chosen to extract the most relevant information from the raw sensor data to classify the gesture. For example, if there are eight cEMG channels, and the window size is 100 samples, then the raw window vector is 100x8 in size. If, for example, 15 features are chosen to represent the raw cEMG data, then the resultant feature vector calculated from that window would be 1x (8 x 15), or 1 x 120.

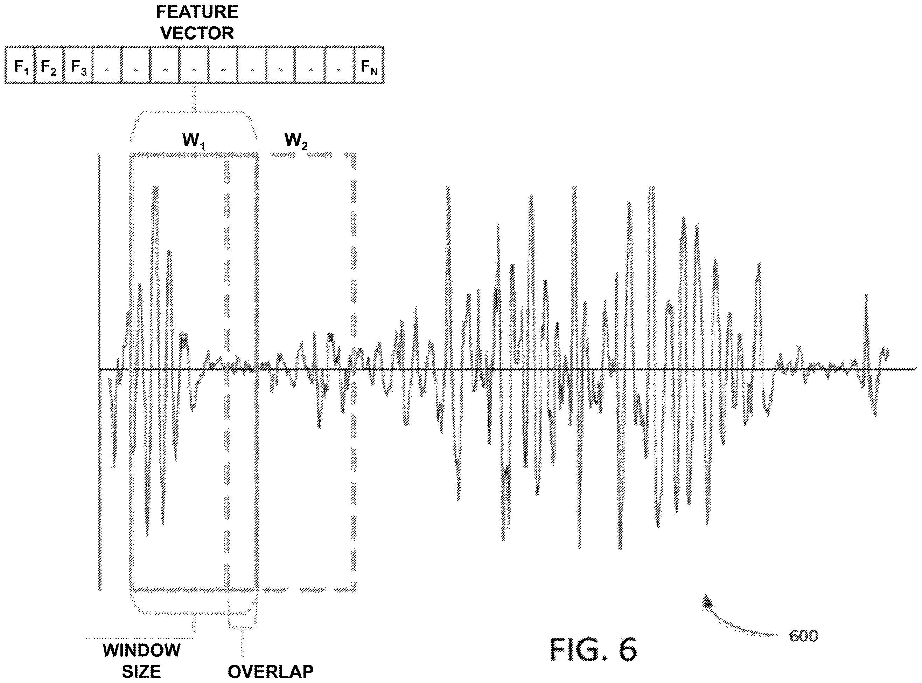

In an illustrative example, 100 samples may be used for the window size and the gesture training module may utilize a sliding window with an overlap (e.g. 50%). This is illustrated by example in FIG. 6, where W₁ represents a window size, W₂ represents a second window of the same size, and there is an overlap between the two.

Thus, the vector acquisition frequency may be, for example, sampleFreq / windowSize. The features may include, but are not limited to, wavelet decomposition coefficients, RMS value, slope sign changes, wave length autoregressive coefficients, etc.

In addition to data acquired from EMG sensors, data acquired from an IMU (accelerometer) may also be segmented into windows that may, for example, correspond to the EMG data of the same instants in time. The features extracted from IMU data may include, but are not limited to, the RMS value, the mean and the standard deviation of the signal.

To train the pattern recognition system, the gesture training module may use two sets of data, including example inputs to the system, and the corresponding outputs from the system. The inputs to the gesture training and pattern recognition system are the features that have been calculated from the windows segmented from the raw EMG data, as well as the IMU (accelerometer) data. The outputs from this system are the detected gestures.

While the user is in the gesture training phase of the system, the user is telling the system what gesture he is performing. This user-defined gesture is what will become the output of the system when it enters the real time classification mode. While the system now knows which segments of data correspond to what gesture (since the user defined it), the system does not yet know within that segment of data where the gesture begins and ends (as the user is not always going to start and finish the gesture at the same instant of time every iteration). Therefore, the beginning and end of the gesture must be identified and distinguished from when the user is not performing the gesture.

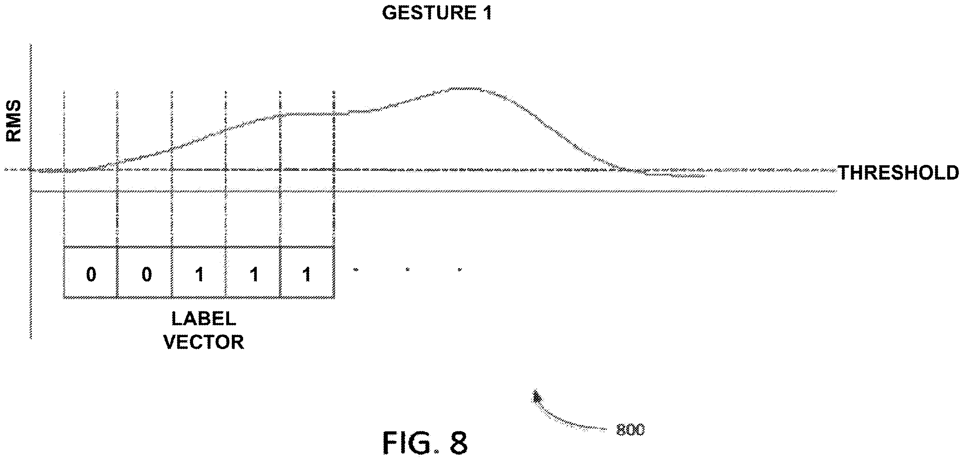

As an example, the beginning and end of a gesture may be determined through EMG data. Assuming that a user has already performed an "on" gesture to turn on the wearable electronic device 200, then the system may monitor a signal channel with an RMS value that exceeds a certain threshold, as illustrated by example in FIG. 8. Once that threshold has been exceeded, then the system begins to calculate the features from the data windows and attempts to classify the gestures.

As an example, features may be calculated by analyzing the RMS value of the EMG and/or IMU data signals. More specifically, when the RMS value of any of the channels of, for example, EMG data becomes greater than the average of the channel when no gesture is being performed, plus three times the standard deviation of the data when no gesture is being performed, then the system may identify that a gesture is being performed. A separate label vector may be created in synchronization with the data that is being recorded for the gesture. This label vector may contain the data that tells the machine learning algorithms when the feature vectors represent a gesture and what gesture that is, and when the feature vectors represent no input. This information is useful for a supervised learning of the pattern recognition algorithm in the next stage described below.

### Pattern Recognition Engine

Once the user has finished recording a number of iterations of each gesture, for however many gestures they want to recognize, the wearable muscle control device begins the pattern recognition phase. As an example, the wearable electronic device may gather all the recorded feature vectors and their corresponding label vectors into a large matrix representing all of the gestures and all of their iterations.

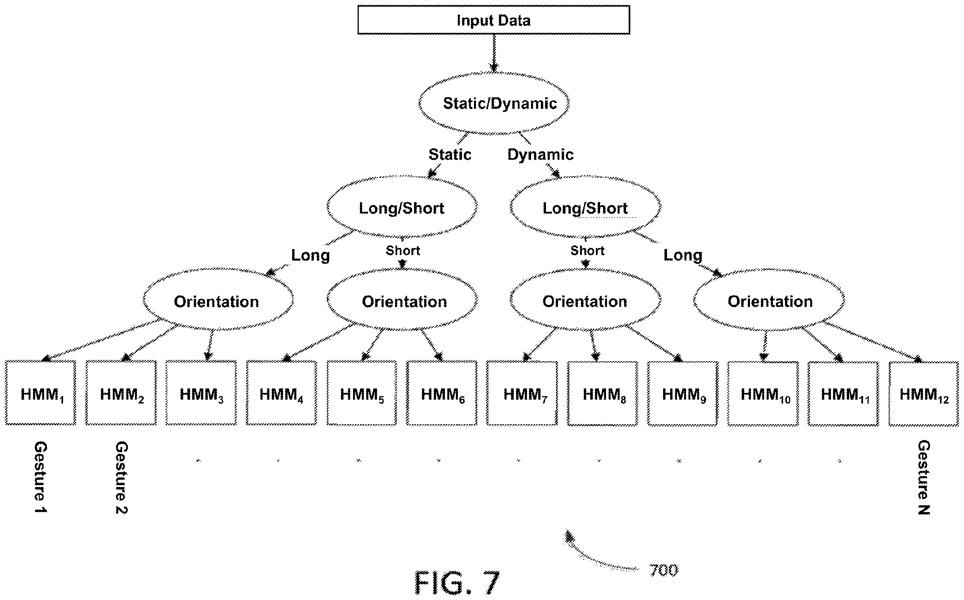

As shown in FIG. 7, in an illustrative example, the hierarchy of the pattern recognition system may comprise a classifier (e.g., a decision tree) 700 with each node representing a different classifier. The result from each classifier will determine which branch to traverse down to get to the next node.

As an example, the first node of the classifier 700 may determine if the gesture is static or dynamic. This may be determined from the standard deviation of the accelerometer signal.

The second node of the classifier 700 may determine whether the gesture is a long or short duration gesture. This may be determined by the length of the activated segment of the RMS value of the EMG signals. For example, a finger snap gesture or a flick gesture may be a short gesture that is almost instantaneous. A long gesture may be a gesture that takes longer than a short instance to complete.

The third node of the classifier 700 may determine the orientation of the hand gesture from the mean value of the IMU, including, for example, data from the three axes of the accelerometers.

The last node of the classifier 700 may use any one of either a Hidden Markov Model, Long-Short Term Neural Net, or other machine intelligence method to classify between the remaining gestures.

The training data may be used to train each of the nodes of this classifier 700 such that the wearable electronic device will be able to correctly identify unknown gesture data that is detected by the sensors thereof.

### Real Time Classification

Once the wearable muscle control device has been trained, and a pattern recognition engine has been established, the device is configured for real time classification and recognition of a gesture it has been trained to recognize.

As an example, data is collected from the muscle activity sensor(s) and inertial sensor(s) in the wearable muscle control device and stored in the device's on-board non-transitory computer-readable memory. The device may wait (i.e., continue to collect data without attempting to identify the gesture performed by the user) until a predetermined number of samples has been recorded as per the feature window size. When the predetermined number of samples has been reached, the processor in the wearable muscle control device calculates all of the features from that block of data, and passes a vector containing the features to the classifier.

Data may be passed through the different nodes of the decision tree as described above, and then on to a final classifier where the gesture is recognized/identified. Once the gesture has been recognized, the gesture and its attributed data are sent to a transceiver module (e.g., a wireless transmitter) to be sent to a connected device.

If the recognized gesture is determined to be one that utilizes the accelerations of the arm as a positional control input, then the velocity of the arm may also be calculated from the accelerations detected by the IMU, and that data is also sent out over the transceiver to the connected device.

Upon successful recognition of a gesture, the vibration motor/actuator in the wearable electronic device can be triggered to vibrate for a duration of time to indicate to the user that a gesture has been successfully recognized/identified. The vibratory motor can be used in other ways to convey information to the user. For example, subtle vibration may be activated during the course of a dynamic gesture, vibration may be used to indicate the device has been woken up, vibration may be used to indicate the device needs to be recalibrated or there is an issue, etc.

### Illustrative Methods

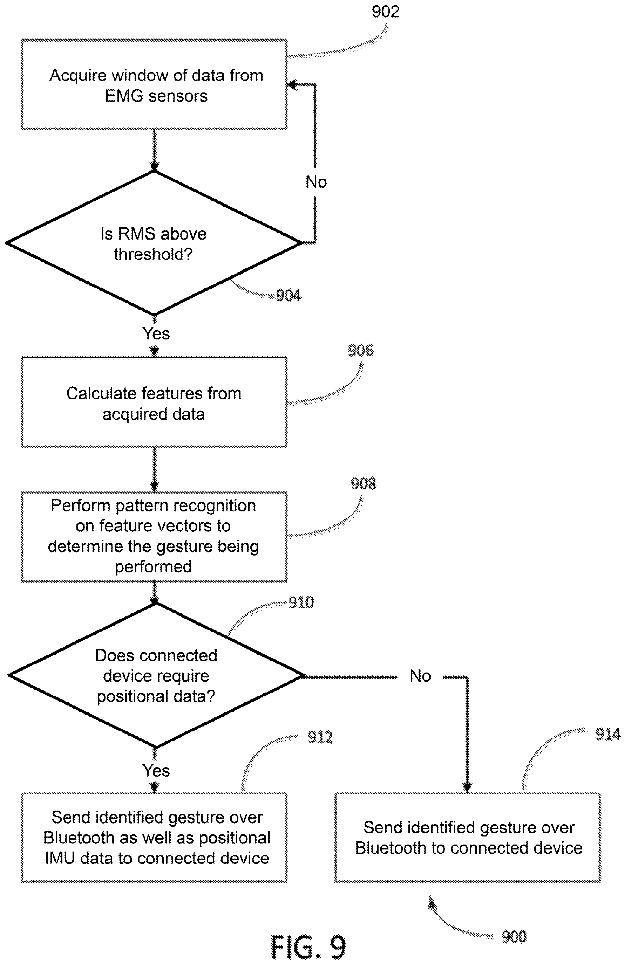

Now referring to FIG. 9, shown is a schematic flow chart of an illustrative method 900 of operating a wearable electronic device (e.g., wearable muscle control device 200) in accordance with the present methods and devices.

As shown, method 900 begins at block 902, where method 900 begins by acquiring signals (e.g. a window of data) from a plurality of muscle activity (e.g., EMG) sensors and at least one inertial (e.g., IMU) sensor.

Next, at decision block 904, method 900 determines if the RMS of the signals is above a predetermined threshold, to determine if the user has performed or is performing a physical gesture. If no, method 900 returns to block 902. If yes, method 900 then proceeds to block 906, where method 900 calculates the features from acquired data. Method 900 then proceeds to block 908, where method 900 performs pattern recognition on the feature vectors to determine the gesture performed or being performed.

In this example, method 900 then proceeds to decision block 910, where method 900 determines if a connected device requires positional data. If yes, method 900 proceeds to block 912, where method 900 sends an identified gesture together with positional IMU data (e.g. relative velocity and/or orientation) to the connected device. If no, method 900 proceeds to block 914, where method 900 sends the identified gesture to the connected device without positional IMU data. The identified gesture and positional IMU data may be sent over a wired connection to the connected device, or alternatively over a wireless communication protocol.

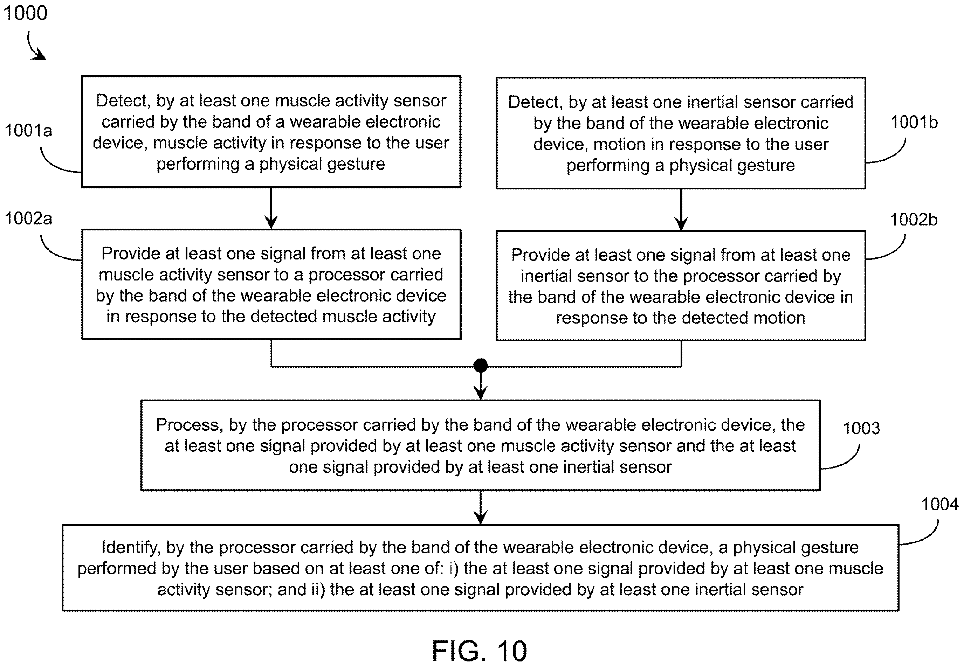

Method 900 illustrated in FIG. 9 is an example of a method in accordance with the present methods and devices. Another example is provided in FIG. 10.

FIG. 10 is a flow-diagram showing a method 1000 of operating a wearable electronic device in accordance with the present methods and devices. The wearable muscle control device (e.g., 200) includes a band (e.g., 201) worn by a user, at least one muscle activity sensor (e.g., 230) carried by the band (e.g., 201), at least one inertial sensor (e.g., 260) carried by the band (e.g., 201), and a processor (e.g., 210) carried by the band (e.g., 201), the processor communicatively coupled to the at least one muscle activity sensor (e.g., 230) and to the at least one inertial sensor (e.g., 260). Method 1000 includes four acts 1001, 1002, 1003, and 1004, with acts 1001 and 1002 both being broken down into two parallel parts: 1001a/b and 1002ab/s, respectively.

To exemplify the relationship between the acts of method 1000 and the elements of the wearable electronic devices described herein, reference to elements of device 200 from FIG 2A are included in parentheses throughout the description of method 1000. However, a person of skill in the art will appreciate that method 1000 may similarly be implemented using hardware that differs from device 200.

At 1001a, muscle activity of a user (e.g., of the arm of a user) is detected by at least one muscle activity sensor (230) carried by the band (201) of the wearable muscle control device (200) in response to the user performing a physical gesture. The at least one muscle activity sensor (230) includes a plurality of cEMG sensors and any number of cEMG sensors in the plurality of cEMG sensors may detect the muscle activity depending on the position of each particular c EMG sensor relative to the muscle(s) that are active in performing the gesture.

At 1002a, at least one signal is provided from at least one muscle activity sensor (230) to the processor (210) carried by the band (201) of the wearable muscle control device (200) in response to the detected muscle activity. The communication path in between the at least one muscle activity sensor (230) and the processor (210) may include any or all of: a filtering circuit to filer the at least one signal provided to the processor (210), an amplification circuit to amplify the at least one signal provided to the processor (210), and/or an analog-to-digital conversion circuit to convert the at least one signal provided to the processor (210) from an analog signal to a digital signal.

Acts 1001b and 1002b may be carried out substantially in parallel with acts 1001a and 1002a, respectively, either at least approximately simultaneously with acts 1001a and 1002a, respectively or staggered/offset from acts 1001a and 1002a.

At 1001b, motion of the user (e.g., of the arm of the user) is detected by at least one inertial sensor (260) carried by the band (201) of the wearable muscle control device (200) in response to the user performing a physical gesture. The at least one inertial sensor (260) may include at least one accelerometer and/or at least one gyroscope, which may be packaged in an IMU. As discussed in more detail below, the physical gesture involving motion detected by at least one inertial sensor (260) at 1001b may be the same physical gesture involving muscle activity detected by at least one muscle activity sensor (230) at 1001a or the physical gesture involving motion detected by at least one inertial sensor (260) at 1001b may be a different physical gesture from the physical gesture involving muscle activity detected by at least one muscle activity sensor (230) at 1001a.

At 1002b, at least one signal is provided from at least one inertial sensor (260) to the processor (210) carried by the band (201) of the wearable electronic device (200) in response to the detected motion. The communication path in between the at least one inertial sensor (260) and the processor (210) may include any or all of: a filtering circuit to filer the at least one signal provided to the processor (210), an amplification circuit to amplify the at least one signal provided to the processor (210), and/or an analog-to-digital conversion circuit to convert the at least one signal provided to the processor (210) from an analog signal to a digital signal.

At 1003, the at least one signal provided by at least one muscle activity sensor (230) at 1002a and the at least one signal provided by at least one inertial sensor (260) at 1002b are both processed by the processor (210) carried by the band (201) of the wearable muscle control device (200). Depending on the application and whether the at least one signal provided by at least one muscle activity sensor (230) and the at least one signal provided by at least one inertial sensor (260) are in response to the same physical gesture or different physical gestures, the at least one signal provided by at least one muscle activity sensor (230) at 1002a and the at least one signal provided by at least one inertial sensor (260) at 1002b may be processed in sequence/series by the processor (210) or they may be processed simultaneously, either in combination or in parallel, by the processor (210). For example, if the at least one signal provided by at least one muscle activity sensor (230) and the at least one signal provided by at least one inertial sensor (260) are both provided substantially simultaneously in response to a single physical gesture, then the at least one signal provided by at least one muscle activity sensor (230) at 1002a and the at least one signal provided by at least one inertial sensor (260) at 1002b may be processed together in combination by the processor (210) in order to identify the physical gesture. Alternatively, if the at least one signal provided by at least one muscle activity sensor (230) and the at least one signal provided by at least one inertial sensor (260) are each provided separately in response to two separate physical gestures (e.g., performed in series), then the at least one signal provided by at least one muscle activity sensor (230) at 1002a and the at least one signal provided by at least one inertial sensor (260) at 1002b may be processed in series by the processor (210) in order to identify the two separate gestures.

At 1004, a physical gesture performed by the user is identified by the processor (210) carried by the band (201) of the wearable muscle control device (200) based on at least one of: i) the at least one signal provided by at least one muscle activity sensor (230); and ii) the at least one signal provided by at least one inertial sensor (260). Returning to the example of a gesture that comprises an index finger extension and a wrist flexion motion in order to control a navigation of a virtual menu (i.e., previously described in the context of FIG. 4), the index finger extension may involve muscle activity that is detected by muscle activity sensors (230) per act 1001a and a corresponding signal may be provided to the on-board processor (210) per act 1002a. Either simultaneously or shortly thereafter (depending on how the user performs the gesture), the wrist flexion may involve motion that is detected by inertial sensor(s) (260) per act 1001b and a corresponding signal may be provided to the on-board processor (210) per act 1002b. The signal(s) from the muscle activity sensors (230) and the signal(s) from the inertial sensor(s) (260) are both processed by the processor (210) per act 1003. Depending on the particular implementation, the physical gesture may be defined as a single gesture comprising an index finger extension and a wrist flexion motion, in which case the gesture may be identified, per act 1004, based on both the signal(s) from the muscle activity sensor(s) (230) and the signal(s) from the inertial sensor(s) 260, or the physical gesture may be defined as having two components that are identified separately: a first gesture comprising an index finger extension that is identified by the processor (210) per act 1004 based on the signal(s) provided by at least one muscle activity sensor (230); and a second gesture comprising a wrist flexion that is identified by the processor (210) per act 1004 based on the signal(s) provided by at least one inertial sensor (260). In either case, in response to identifying the gesture(s) performed by the user, one or more signals (e.g., control signals) may be provided by the processor (210) to a wireless transmitter (250) carried by the band (201) of the wearable muscle control device (200) and wirelessly transmitted to any other electronic device in order to effect an action of, function of, control of, or interaction with the other electronic device. In this way, the wearable muscle control device (200) provides a general-purpose human-electronics interface.

While a wearable heads-up display device has been used as an illustrative example of a connected device, as will be appreciated, the wearable electronic devices and methods of the present disclosure may be used for interaction with many other types of connected devices in virtually any application in which connected devices are contemplated. Thus as an exemplary aspect, there is provided an apparatus for detecting and analyzing signals for gesture control, comprising: a plurality of capacitive electromyography (cEMG) sensors configured to detect a gesture by measuring in each cEMG sensor an electrical signal produced by an electrical charge induced in an electrode of the cEMG sensors by muscle activity; and a processor configured to receive the one or more electrical signals from the plurality of cEMG sensors as acquired data, process the acquired data by calculating a feature vector representative of a window of acquired data, and detect the gesture by analyzing a resulting feature vector to recognize a pattern.

In this example, the apparatus further comprises one or more inertial measurement unit (IMU) sensors configured to detect motion and orientation of a gesture by measuring relative velocity and orientation of the apparatus; and wherein, the processor is further configured to receive acquired data from the IMU, process the acquired IMU data to determine the position and orientation of the apparatus, and detect the gesture by analyzing the relative velocity and orientation of the apparatus together with the analyzed feature vector.

Throughout this specification and the appended claims the term "communicative" as in "communicative pathway," "communicative coupling," and in variants such as "communicatively coupled," is generally used to refer to any arrangement for transferring and/or exchanging information. Exemplary communicative pathways include, but are not limited to, electrically conductive pathways (e.g., electrically conductive wires, electrically conductive traces), magnetic pathways (e.g., magnetic media), and/or optical pathways (e.g., optical fiber), and exemplary communicative couplings include, but are not limited to, electrical couplings, magnetic couplings, and/or optical couplings.

Throughout this specification and the appended claims, the term "provide" and variants such as "provided" and "providing" are frequently used in the context of signals. For example, a muscle activity sensor is described as "providing at least one signal" and an inertial sensor is described as "providing at least one signal." Unless the specific context requires otherwise, the term "provide" is used in a most general sense to cover any form of providing a signal, including but not limited to: relaying a signal, outputting a signal, generating a signal, routing a signal, creating a signal, transducing a signal, and so on. For example, a surface EMG sensor may include at least one electrode that resistively or capacitively couples to electrical signals from muscle activity. This coupling induces a change in a charge or electrical potential of the at least one electrode which is then relayed through the sensor circuitry and output, or "provided," by the sensor. Thus, the surface EMG sensor may "provide" an electrical signal by relaying an electrical signal from a muscle (or muscles) to an output (or outputs). In contrast, an inertial sensor may include components (e.g., piezoelectric, piezoresistive, capacitive, etc.) that are used to convert physical motion into electrical signals. The inertial sensor may "provide" an electrical signal by detecting motion and generating an electrical signal in response to the motion.

Throughout this specification and the appended claims, infinitive verb forms are often used. Examples include, without limitation: "to detect," "to provide," "to transmit," "to communicate," "to process," "to route," and the like. Unless the specific context requires otherwise, such infinitive verb forms are used in an open, inclusive sense, that is as "to, at least, detect," to, at least, provide," "to, at least, transmit," and so on.

For instance, the foregoing detailed description has set forth various embodiments of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one embodiment, the present subject matter may be implemented via Application Specific Integrated Circuits (ASICs). However, those skilled in the art will recognize that the embodiments disclosed herein, in whole or in part, can be equivalently implemented in standard integrated circuits, as one or more computer programs executed by one or more computers (e.g., as one or more programs running on one or more computer systems), as one or more programs executed by on one or more controllers (e.g., microcontrollers) as one or more programs executed by one or more processors (e.g., microprocessors, central processing units, graphical processing units), as firmware, or as virtually any combination thereof, and that designing the circuitry and/or writing the code for the software and or firmware would be well within the skill of one of ordinary skill in the art in light of the teachings of this disclosure.

When logic is implemented as software and stored in memory, logic or information can be stored on any computer-readable medium for use by or in connection with any processor-related system or method. In the context of this disclosure, a memory is a computer-readable medium that is an electronic, magnetic, optical, or other physical device or means that contains or stores a computer and/or processor program. Logic and/or the information can be embodied in any computer-readable medium for use by or in connection with an instruction execution system, apparatus, or device, such as a computer-based system, processor-containing system, or other system that can fetch the instructions from the instruction execution system, apparatus, or device and execute the instructions associated with logic and/or information. In the context of this specification, a "non-transitory computer readable medium" can be any element that can store the program associated with logic and/or information for use by or in connection with the instruction execution system, apparatus, and/or device. The computer-readable medium can be, for example, but is not limited to, an electronic, magnetic, optical, electromagnetic, infrared, or semiconductor system, apparatus or device. More specific examples (a non-exhaustive list) of the computer readable medium would include the following: a portable computer diskette (magnetic, compact flash card, secure digital, or the like), a random access memory (RAM), a read only memory (ROM), an erasable programmable read-only memory (EPROM, EEPROM, or Flash memory), a portable compact disc read-only memory (CDROM), digital tape, and other non-transitory media.

The various embodiments described above can be combined to provide further embodiments.

## Claims

1. A wearable muscle control device (200) comprising: an expandable band (201) that is adapted to be worn by a user;
a plurality of capacitive EMG sensors (230) integrated into the band, each capacitive EMG sensor in the plurality of sensors configured to, in use, detect electrical signals produced by muscle activity in response to the user performing a first physical gesture and provide at least one signal in response to the detected muscle activity;
at least one inertial sensor (260) integrated into the band, the at least one inertial sensor configured to, in use, detect motion in response to the user performing a second physical gesture and provide at least one signal in response to the detected motion; and
a processor (210) integrated into the band, the processor being communicatively coupled to the plurality of capacitive EMG sensors and to the at least one inertial sensor, and the processor being configured to, in use:
detect and process at least one signal provided by each of the plurality of capacitive EMG sensors and the at least one signal provided by the at least one inertial sensor, and
identify the first physical gesture and the second physical gesture performed by the user, wherein:
the first physical gesture is identified based on the at least one signal provided by each of the plurality of capacitive EMG sensors; and
the second physical gesture defined by a motion, is different from the first physical gesture, and is identified based on the at least one signal provided by the at least one inertial sensor.

2. The wearable muscle control device (200) of claim 1, further comprising a non-transitory computer-readable storage medium (504) carried by the band (201) and communicatively coupled to the processor (210), wherein the non-transitory computer-readable storage medium stores processor executable instructions that, when executed by the processor, cause the processor to identify:
the first physical gesture performed by the user based on the at least one signal provided by the plurality of capacitive EMG sensors (230); and
the second physical gesture performed by the user based on the at least one signal provided by the at least one inertial sensor (260).

3. The wearable muscle control device (200) of claim 1, further comprising a wireless transmitter (250) integrated into the band (201), the wireless transmitter communicatively coupled to the processor (210) to, in use, wirelessly transmit at least one signal in response to the processor identifying the first physical gesture performed by the user and wirelessly transmit at least one signal in response to the processor identifying the second physical gesture performed by the user.

4. The wearable muscle control device (200) of claim 1, further comprising a haptic feedback module (240) integrated into the band (201), the haptic feedback module configured to, in use, provide haptic feedback to the user.

5. The wearable muscle control device (200) of claim 1 wherein the band (201) is adapted to be worn on the forearm of the user.

6. The wearable muscle control device (200) of claim 1 wherein the at least one inertial sensor (260) includes at least one inertial sensor selected from the group consisting of: an accelerometer, a gyroscope, and an inertial measurement unit (IMU).

7. A method of operating a wearable muscle control device (200), wherein the wearable muscle control device includes an expandable band (201) worn by a user, a plurality of capacitive EMG sensors (230) integrated into the band, at least one inertial sensor (260) integrated into the band, and a processor (210) integrated into the band, the processor communicatively coupled to the plurality of capacitive EMG sensors and to the at least one inertial sensor, the method comprising:
detecting, by the plurality of capacitive EMG sensors integrated into the band of the wearable electronic device, electrical signals produced by muscle activity in response to the user performing a first physical gesture;
providing, by each of the plurality of capacitive EMG sensors at least one signal to the processor in response to the detected muscle activity;
detecting, by at least one inertial sensor, motion in response to the user performing a second physical gesture;
providing, by the at least one inertial sensor, at least one signal to the processor in response to the detected motion;
processing, by the processor, the at least one signal provided by each of the plurality of capacitive EMG sensors and the at least one signal provided by the at least one inertial sensor;
identifying, by the processor, the first physical gesture and the second physical gesture performed by the user, wherein:
the first physical gesture is identified based on the at least one signal provided by each of the plurality of capacitive EMG sensors; and
the second physical gesture defined by a motion, is different from the first physical gesture, and is identified based on the at least one signal provided by the at least one inertial sensor.

8. The method of claim 7 wherein the wearable muscle control device (200) further includes, a wireless transmitter (250) integrated into the band (201) and communicatively coupled to the processor (210), the method further comprising:
wirelessly transmitting at least one signal in response to the processor identifying the first physical gesture performed by the user;
and wirelessly transmitting at least one signal in response to the processor identifying the second physical gesture performed by the user.

9. The method of claim 7 wherein the wearable muscle control device further includes a haptic feedback module (240) integrated into the band (201), the haptic feedback module including a vibratory motor that is communicatively coupled to the processor (210), the method further comprising:
providing haptic feedback to the user by the vibratory motor in response to the processor identifying the first physical gesture performed by the user;
providing haptic feedback to the user by the vibratory motor in response to the processor identifying the second physical gesture performed by the user.

## Patentansprüche

1. Eine tragbare Muskelsteuervorrichtung (200), die Folgendes beinhaltet: ein dehnbares Band (201), das angepasst ist, um von einem Benutzer getragen zu werden;
eine Vielzahl von kapazitiven EMG-Sensoren (230), die in das Band integriert sind, wobei jeder kapazitive EMG-Sensor in der Vielzahl von Sensoren konfiguriert ist, um bei Verwendung elektrische Signale, die durch Muskelaktivität erzeugt werden, als Antwort darauf, dass der Benutzer eine erste physische Geste durchführt, zu erkennen und als Antwort auf die erkannte Muskelaktivität mindestens ein Signal bereitzustellen;
mindestens einen Trägheitssensor (260), der in das Band integriert ist, wobei der mindestens eine Trägheitssensor konfiguriert ist, um bei Verwendung eine Bewegung als Antwort darauf, dass der Benutzer eine zweite physische Geste durchführt, zu erkennen und mindestens ein Signal als Antwort auf die erkannte Bewegung bereitzustellen; und
einen Prozessor (210), der in das Band integriert ist, wobei der Prozessor mit der Vielzahl von kapazitiven EMG-Sensoren und dem mindestens einen Trägheitssensor kommunikativ gekoppelt ist und wobei der Prozessor bei Verwendung konfiguriert ist zum:
Erkennen und Verarbeiten mindestens eines Signals, das von jedem der Vielzahl von kapazitiven EMG-Sensoren bereitgestellt wird, und des mindestens einen Signals, das von dem mindestens einen Trägheitssensor bereitgestellt wird, und
Identifizieren der ersten physischen Geste und der zweiten physischen Geste, die von dem Benutzer durchgeführt werden, wobei:
die erste physische Geste basierend auf dem mindestens einen Signal, das von jedem der Vielzahl von kapazitiven EMG-Sensoren bereitgestellt wird, identifiziert wird; und
sich die zweite physische Geste, die durch eine Bewegung definiert wird, von der ersten physischen Geste unterscheidet und basierend auf dem mindestens einen Signal, das von dem mindestens einen Trägheitssensor bereitgestellt wird, identifiziert wird.

2. Tragbare Muskelsteuervorrichtung (200) gemäß Anspruch 1, die ferner ein nichttransitorisches computerlesbares Speichermedium (504) beinhaltet, das von dem Band (201) getragen wird und mit dem Prozessor (210) kommunikativ gekoppelt ist, wobei das nichttransitorische computerlesbare Speichermedium von dem Prozessor ausführbare Anweisungen speichert, die, wenn sie von dem Prozessor ausgeführt werden, bewirken, dass der Prozessor Folgendes identifiziert:
die erste physische Geste, die von dem Benutzer durchgeführt wird, basierend auf dem mindestens einen Signal, das von der Vielzahl von kapazitiven EMG-Sensoren (230) bereitgestellt wird; und
die zweite physische Geste, die von dem Benutzer durchgeführt wird, basierend auf dem mindestens einen Signal, das von dem mindestens einen Trägheitssensor (260) bereitgestellt wird.

3. Tragbare Muskelsteuervorrichtung (200) gemäß Anspruch 1, die ferner einen drahtlosen Sender (250) beinhaltet, der in das Band (201) integriert ist, wobei der drahtlose Sender mit dem Prozessor (210) kommunikativ gekoppelt ist, um bei Verwendung mindestens ein Signal als Antwort darauf, dass der Prozessor die erste physische Geste identifiziert, die von dem Benutzer durchgeführt wird, drahtlos zu übertragen und mindestens ein Signal als Antwort darauf, dass der Prozessor die zweite physische Geste identifiziert, die von dem Benutzer durchgeführt wird, drahtlos zu übertragen.

4. Tragbare Muskelsteuervorrichtung (200) gemäß Anspruch 1, die ferner ein haptisches Rückkopplungsmodul (240) beinhaltet, das in das Band (201) integriert ist, wobei das haptische Rückkopplungsmodul konfiguriert ist, um für den Benutzer bei Verwendung haptische Rückkopplung bereitzustellen.

5. Tragbare Muskelsteuervorrichtung (200) gemäß Anspruch 1, wobei das Band (201) angepasst ist, um an dem Unterarm des Benutzers getragen zu werden.

6. Tragbare Muskelsteuervorrichtung (200) gemäß Anspruch 1, wobei der mindestens eine Trägheitssensor (260) mindestens einen Trägheitssensor umfasst, der aus der Gruppe ausgewählt ist, die aus Folgendem besteht: einem Beschleunigungsmesser, einem Gyroskop und einer Trägheitsmesseinheit (IMU, Inertial Measurement Unit).

7. Ein Verfahren zum Betreiben einer tragbaren Muskelsteuervorrichtung (200), wobei die tragbare Muskelsteuervorrichtung ein dehnbares Band (201), das von einem Benutzer getragen wird, eine Vielzahl von kapazitiven EMG-Sensoren (230), die in das Band integriert sind, mindestens einen Trägheitssensor (260), der in das Band integriert ist, und einen Prozessor (210), der in das Band integriert ist, umfasst, wobei der Prozessor mit der Vielzahl von kapazitiven EMG-Sensoren und dem mindestens einen Trägheitssensor kommunikativ gekoppelt ist, wobei das Verfahren Folgendes beinhaltet:
Erkennen, durch die Vielzahl von kapazitiven EMG-Sensoren, die in das Band der tragbaren elektronischen Vorrichtung integriert sind, elektrischer Signale, die durch Muskelaktivität erzeugt werden, als Antwort darauf, dass der Benutzer eine erste physische Geste durchführt;
Bereitstellen, durch jeden der Vielzahl von kapazitiven EMG-Sensoren, mindestens eines Signals für den Prozessor als Antwort auf die erkannte Muskelaktivität;
Erkennen, durch mindestens einen Trägheitssensor, einer Bewegung als Antwort darauf, dass der Benutzer eine zweite physische Geste durchführt;
Bereitstellen, durch den mindestens einen Trägheitssensor, mindestens eines Signals für den Prozessor als Antwort auf die erkannte Bewegung;
Verarbeiten, durch den Prozessor, des mindestens einen Signals, das von jedem der Vielzahl von kapazitiven EMG-Sensoren bereitgestellt wird, und des mindestens einen Signals, das von dem mindestens einen Trägheitssensor bereitgestellt wird;
Identifizieren, durch den Prozessor, der ersten physischen Geste und der zweiten physischen Geste, die von dem Benutzer durchgeführt werden, wobei:
die erste physische Geste basierend auf dem mindestens einen Signal, das von jedem der Vielzahl von kapazitiven EMG-Sensoren bereitgestellt wird, identifiziert wird; und
sich die zweite physische Geste, die durch eine Bewegung definiert wird, von der ersten physischen Geste unterscheidet und basierend auf dem mindestens einen Signal, das von dem mindestens einen Trägheitssensor bereitgestellt wird, identifiziert wird.

8. Verfahren gemäß Anspruch 7, wobei die tragbare Muskelsteuervorrichtung (200) ferner einen drahtlosen Sender (250) umfasst, der in das Band (201) integriert ist und mit dem Prozessor (210) kommunikativ gekoppelt ist, wobei das Verfahren ferner Folgendes beinhaltet:
drahtloses Übertragen mindestens eines Signals als Antwort darauf, dass der Prozessor die erste physische Geste identifiziert, die von dem Benutzer durchgeführt wird;
und drahtloses Übertragen mindestens eines Signals als Antwort darauf, dass der Prozessor die zweite physische Geste identifiziert, die von dem Benutzer durchgeführt wird.

9. Verfahren gemäß Anspruch 7, wobei die tragbare Muskelsteuervorrichtung ferner ein haptisches Rückkopplungsmodul (240) umfasst, das in das Band (201) integriert ist, wobei das haptische Rückkopplungsmodul einen Vibrationsmotor umfasst, der mit dem Prozessor (210) kommunikativ gekoppelt ist, wobei das Verfahren ferner Folgendes beinhaltet:
Bereitstellen einer haptischen Rückkopplung für den Benutzer durch den Vibrationsmotor als Antwort darauf, dass der Prozessor die erste physische Geste identifiziert, die von dem Benutzer durchgeführt wird;
Bereitstellen einer haptischen Rückkopplung für den Benutzer durch den Vibrationsmotor als Antwort darauf, dass der Prozessor die zweite physische Geste identifiziert, die von dem Benutzer durchgeführt wird.

## Revendications

1. Un dispositif de contrôle musculaire enfilable (200) comprenant : un bandeau extensible (201) qui est conçu pour être enfilé par un utilisateur ;
une pluralité de capteurs EMG capacitifs (230) intégrés dans le bandeau, chaque capteur EMG capacitif de la pluralité de capteurs étant configuré pour, en utilisation, détecter des signaux électriques produits par une activité musculaire en réponse à un premier geste physique que l'utilisateur effectue et fournir au moins un signal en réponse à l'activité musculaire détectée ;
au moins un capteur inertiel (260) intégré dans le bandeau, l'au moins un capteur inertiel étant configuré pour, en utilisation, détecter un mouvement en réponse à un deuxième geste physique que l'utilisateur effectue et fournir au moins un signal en réponse au mouvement détecté ; et
un processeur (210) intégré dans le bandeau, le processeur étant couplé de manière à communiquer à la pluralité de capteurs EMG capacitifs et à l'au moins un capteur inertiel, et le processeur étant configuré pour, en utilisation :
détecter et traiter au moins un signal fourni par chaque capteur de la pluralité de capteurs EMG capacitifs et l'au moins un signal fourni par l'au moins un capteur inertiel, et
identifier le premier geste physique et le deuxième geste physique effectués par l'utilisateur, où :
le premier geste physique est identifié sur la base de l'au moins un signal fourni par chaque capteur de la pluralité de capteurs EMG capacitifs ; et
le deuxième geste physique défini par un mouvement, est différent du premier geste physique, et est identifié sur la base de l'au moins un signal fourni par l'au moins un capteur inertiel.

2. Le dispositif de contrôle musculaire enfilable (200) de la revendication 1, comprenant en sus un support de stockage lisible par ordinateur non transitoire (504) porté par le bandeau (201) et couplé de manière à communiquer au processeur (210), où le support de stockage lisible par ordinateur non transitoire stocke des instructions exécutables par processeur qui, lorsqu'elles sont exécutées par le processeur, amènent le processeur à identifier :
le premier geste physique effectué par l'utilisateur sur la base de l'au moins un signal fourni par la pluralité de capteurs EMG capacitifs (230) ; et
le deuxième geste physique effectué par l'utilisateur sur la base de l'au moins un signal fourni par l'au moins un capteur inertiel (260).

3. Le dispositif de contrôle musculaire enfilable (200) de la revendication 1, comprenant en sus un émetteur sans fil (250) intégré dans le bandeau (201), l'émetteur sans fil étant couplé de manière à communiquer au processeur (210) pour, en utilisation, émettre sans fil au moins un signal en réponse à l'identification par le processeur du premier geste physique effectué par l'utilisateur et émettre sans fil au moins un signal en réponse à l'identification par le processeur du deuxième geste physique effectué par l'utilisateur.

4. Le dispositif de contrôle musculaire enfilable (200) de la revendication 1, comprenant en sus un module à retour haptique (240) intégré dans le bandeau (201), le module à retour haptique étant configuré pour, en utilisation, fournir un retour haptique à l'utilisateur.

5. Le dispositif de contrôle musculaire enfilable (200) de la revendication 1 où le bandeau (201) est conçu pour être enfilé sur l'avant-bras de l'utilisateur.

6. Le dispositif de contrôle musculaire enfilable (200) de la revendication 1 où l'au moins un capteur inertiel (260) inclut au moins un capteur inertiel sélectionné dans le groupe constitué : d'un accéléromètre, d'un gyroscope, et d'une unité de mesure inertielle (UMI).

7. Un procédé de fonctionnement d'un dispositif de contrôle musculaire enfilable (200), où le dispositif de contrôle musculaire enfilable inclut un bandeau extensible (201) enfilé par un utilisateur, une pluralité de capteurs EMG capacitifs (230) intégrés dans le bandeau, au moins un capteur inertiel (260) intégré dans le bandeau, et un processeur (210) intégré dans le bandeau, le processeur étant couplé de manière à communiquer à la pluralité de capteurs EMG capacitifs et à l'au moins un capteur inertiel, le procédé comprenant le fait :
de détecter, par la pluralité de capteurs EMG capacitifs intégrés dans le bandeau du dispositif électronique enfilable, des signaux électriques produits par une activité musculaire en réponse à un premier geste physique que l'utilisateur effectue ;
de fournir, par chaque capteur de la pluralité de capteurs EMG capacitifs au moins un signal au processeur en réponse à l'activité musculaire détectée ;
de détecter, par au moins un capteur inertiel, un mouvement en réponse à un deuxième geste physique que l'utilisateur effectue ;
de fournir, par l'au moins un capteur inertiel, au moins un signal au processeur en réponse au mouvement détecté ;
de traiter, par le processeur, l'au moins un signal fourni par chaque capteur de la pluralité de capteurs EMG capacitifs et l'au moins un signal fourni par l'au moins un capteur inertiel ;
d'identifier, par le processeur, le premier geste physique et le deuxième geste physique effectués par l'utilisateur, où :
le premier geste physique est identifié sur la base de l'au moins un signal fourni par chaque capteur de la pluralité de capteurs EMG capacitifs ; et
le deuxième geste physique défini par un mouvement, est différent du premier geste physique, et est identifié sur la base de l'au moins un signal fourni par l'au moins un capteur inertiel.

8. Le procédé de la revendication 7 où le dispositif de contrôle musculaire enfilable (200) inclut en sus, un émetteur sans fil (250) intégré dans le bandeau (201) et couplé de manière à communiquer au processeur (210), le procédé comprenant en sus le fait :
d'émettre sans fil au moins un signal en réponse à l'identification par le processeur du premier geste physique effectué par l'utilisateur ;
et d'émettre sans fil au moins un signal en réponse à l'identification par le processeur du deuxième geste physique effectué par l'utilisateur.

9. Le procédé de la revendication 7 où le dispositif de contrôle musculaire enfilable inclut en sus un module à retour haptique (240) intégré dans le bandeau (201), le module à retour haptique incluant un moteur vibratoire qui est couplé de manière à communiquer au processeur (210), le procédé comprenant en sus le fait :
de fournir un retour haptique à l'utilisateur par le moteur vibratoire en réponse à l'identification par le processeur du premier geste physique effectué par l'utilisateur ;
de fournir un retour haptique à l'utilisateur par le moteur vibratoire en réponse à l'identification par le processeur du deuxième geste physique effectué par l'utilisateur.
